# EUROPEAN PATENT SPECIFICATION

(11) **EP 2 360 952 B1**
(45) Date of publication and mention of the grant of the patent: **01.03.2017**
(21) Application number: 09828634.7
(22) Date of filing: 24.11.2009
(51) Int. Cl.: H04W 48/12, H04L 5/00

(54) **LARGE BANDWIDTH MULTI-CARRIER SYSTEM AND ITS BROADCAST INFORMATION UPDATING METHOD**
MEHRTRÄGERSYSTEM MIT GROSSER BANDBREITE UND VERFAHREN ZUR AKTUALISIERUNG VON RUNDFUNKINFORMATIONEN DAMIT
SYSTÈME MULTI-PORTEUSE À GRANDE LARGEUR DE BANDE ET SON PROCÉDÉ DE MISE À JOUR DES INFORMATIONS DE DIFFUSION

(30) Priority: 27.11.2008 CN 200810179198
(43) Date of publication of application: 24.08.2011
(73) Proprietor: ZTE Corporation, Guangdong Province 518057 (CN)
(72) Inventor: WEI, Wei, Shenzhen City, Guangdong Province 518057 (CN); HAN, Xiaojiang, Shenzhen City, Guangdong Province 518057 (CN)
(74) Representative: Zerbi, Guido Maria
(86) International application number: PCT/CN2009/075111
(87) International publication number: WO 2010/060374

(56) References cited:
- WO-A1-01/30094
- WO-A1-2008/040088
- CA-A1- 2 654 925
- CN-A- 1 738 473
- CN-A- 1 795 630
- CN-A- 1 893 344
- CN-A- 1 946 227
- US-B1- 6 700 936
- SAXENA P C ET AL: "Access methods for handling the updates of broadcast data in wireless mobile computing", COMPUTER STANDARDS AND INTERFACES, ELSEVIER SEQUOIA. LAUSANNE, CH, vol. 24, no. 3, 1 July 2002 (2002-07-01), pages 207-226, XP004360410, ISSN: 0920-5489, DOI: 10.1016/S0920-5489(02)00015-6

## Description

### Technical Field

The present invention relates to an ultra-large variable bandwidth wireless communication system (that is, a large bandwidth multi-carrier system), and more especially, to a large bandwidth multi-carrier system and its broadcast information updating method.

### Background of the Related Art

The 4G wireless communication system has higher spectrum efficiency than the 3G mobile communication system has, and the target of the 4G wireless communication system is to increase the mobile user data transmission rate up to 100Mbit/s, and the static user data transmission rate 1Gbit/s. Due to the needs of smooth evolution of the mobile communication system and in order to protect the benefit of the operators, the 4G wireless communication system and the 3G wireless communication system (such as the TD-SCDMA system or 802.16e system etc.) will be compatible or coexist for a certain period.

The bandwidth of the 4G wireless communication system can reach 100MHz, and it is variable so that the 4G wireless communication system can flexibly set the system bandwidth of each cell according to the service demands in the whole network.

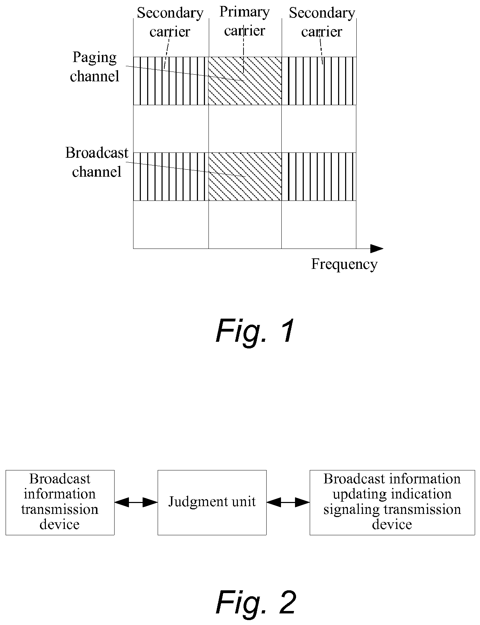

Nowadays, in large bandwidth multi-carrier systems, the carriers divide into the primary carriers and secondary carriers where the primary carriers can work independently, including the states of terminal access, IDLE and CONNECT. While the secondary carriers are only used to work in the state of CONNECT, wherein, the following methods can be used to design the broadcast channel (BCH):
1. Design a complete broadcast information in each carrier, therefore, when the broadcast information changes, the terminal reads the updated broadcast information at the position of the broadcast channel corresponding to the carrier on which the terminal is located, wherein, the paging information is used to indicate the change of the broadcast information, and the shortcoming of the method is that it has large system overhead.
2. The broadcast information is only designed on the primary carriers, therefore, when the broadcast information is updated, the terminal on the primary carriers reads the updated broadcast information at the position of the broadcast channel corresponding to the primary carriers, while the terminal in the secondary carriers needs to frequency hop to the primary carriers to read the updated broadcast information, that is, all the terminals in the state of CONNECT need to frequency hop to the primary carriers to update the broadcast information, wherein, the paging information is used to indicate that the broadcast information should be updated, whose shortcoming is that the terminals in the secondary carriers need to frequency hop frequently.
3. The broadcast information may be hierarchically designed in the primary and secondary carriers, as shown in FIG. 1, the broadcast information is sorted hierarchically into the cell-level broadcast information and the carrier-specialized broadcast information. The complete broadcast information is designed on the primary carriers, while only the carrier-specialized broadcast information, such as the random access channel (RACH) resource information of the carrier or the relatively frequently modified information such as the time division duplex (TDD) downlink sub-frame assignment information, is designed on the secondary carriers. Therefore, when the broadcast information is updated, the terminal needs to read the broadcast information on the primary carriers and the broadcast information on the working carrier, and for the terminals working on the secondary carrier, after the indication to update the broadcast information is received via the paging information, the terminal needs to read all the broadcast information in the system, that is, while the terminals read the carrier-specialized broadcast information on its working secondary carrier, it also needs to frequency hop to the primary carriers to read the cell-level broadcast information, therefore, the problem that the terminals needs to frequency hop frequently in order to update the broadcast information cannot be solved.

To sum up, the broadcast channel structure design and the broadcast information updating indication in the prior art cannot meet the large bandwidth multi-carrier system, therefore, a large bandwidth multi-carrier system and its broadcast information updating method are desired.

The patent application CA 2654925 A1 merely discloses that a base station for transmitting a radio frame in which L1/L2 control channels are multiplexed in a part of a subframe in order to transmit shared data channels comprises: a broadcast channel generating section (101) for generating a broadcast channel; an L1/L2 control channel generating section (103) for generating at least one broadcast channel control information among an update flag for notifying whether the broadcast channel information has been changed, allocation information on the broadcast channels, and L3 control information on the broadcast channels as the L1/L2 control channels corresponding to the broadcast channels.

### Summary of the Invention

The present invention is to provide a large bandwidth multi-carrier system and the broadcast information updating method to solve the problem that the terminals need to frequency hop frequently to update the broadcast information.

In order to solve the above technical problem, the present invention discloses a method for updating broadcast information in a large bandwidth multi-carrier system, the method comprises:
a system side sending complete broadcast information periodically only on primary carriers, and when the broadcast information is updated, the system side updating the broadcast information on the primary carriers, and then sending a broadcast information updating indication signaling in paging channels of both the primary carriers and secondary carriers, and sending the updated broadcast information on all the secondary carriers.

Furthermore, in the above method, when the broadcast information is not updated, said system side does not configure the broadcast information on the secondary carriers.

Furthermore, in the above method, after receiving said broadcast information updating indication signaling, a terminal reading said updated broadcast information at a corresponding position.

Furthermore, in the above method:
after receiving said broadcast information updating indication signaling, the terminal residing on the primary carriers reads said updated broadcast information on the primary carriers;
after receiving said broadcast information updating indication signaling, the terminal working on the secondary carriers reads said updated broadcast information in broadcast channels of the secondary carriers.

Furthermore, in the above method, the step of said system side sending the updated broadcast information on all secondary carriers is: the system side only sending an updated part in the updated broadcast information on all secondary carriers, or the system side sending the complete broadcast information including the updated part on all secondary carriers.

Furthermore, in the above method, when said system side sends the complete broadcast information including the updated content in all secondary carriers, said method also comprises: said system side configuring the broadcast channels of all secondary carriers according to a structure of the broadcast channels of the primary carriers.

Furthermore, in the above method, when said system side only sends the updated part in the broadcast information on all secondary carriers, said method also comprises: said system side dynamically configuring the broadcast channels so as to transmit the updated part in the updated broadcast information, wherein, positions and sizes of said broadcast channels are indicated via a downlink control channel.

The present invention also discloses a large bandwidth multi-carrier system, and the system comprises a judgment unit, and a broadcast information transmission device and a broadcast information update indication signaling transmission device connected with the judgment unit respectively, wherein,
said broadcast information transmission device is configured to: periodically send complete broadcast information on primary carriers, and update the broadcast information on the primary carriers according to a notification from said judgment unit, and send the updated broadcast information on all secondary carriers;
said judgment unit is configured to: judge whether the broadcast information on the primary carriers is updated or not, and, if yes, notify said broadcast information transmission device and said broadcast information updating indication signaling transmission device;
said broadcast information updating indication signaling transmission device is configured to: send the broadcast information updating indication signaling in paging channels of all carriers according to the notification from said judgment unit.

Furthermore, in the above system, the updated broadcast information sent on all secondary carriers by said broadcast information transmission device is the complete broadcast information including an updated content or an updated part in the updated broadcast information.

Furthermore, in the above system, said broadcast information transmission device is further configured to, when the complete broadcast information including the updated content is transmitted on all secondary carriers, configure broadcast channels of all secondary carriers according to a structure of the broadcast channels of said primary carriers.

Furthermore, in the above system, said broadcast information transmission device is further configured to, when only the updated part in the updated broadcast information is sent on all secondary carriers, dynamically configure the broadcast channels to transmit the updated part in the updated broadcast information, wherein, positions and sizes of the broadcast channels are indicated via a downlink control channel.

With the technical scheme of the present invention, the terminals on both the primary carriers and the secondary carriers can update the corresponding broadcast information according to the BCH updating indication signaling of the paging channels when the broadcast information is updated, thus finally simplifying the process of the terminal updating the broadcast information, solving the problem that the terminals frequency hop frequently to update the broadcast information, minimizing the BCH transmission overhead, and saving the overhead to the most extent and improving the spectrum efficiency for the multi-carrier system.

### Brief Description of Drawings

FIG. 1 is an illustration of the leveled broadcast channels and paging information in the large bandwidth multi-carrier system;
FIG. 2 is an illustration of the structure of the large bandwidth multi-carrier system in accordance with an embodiment of the present invention;
FIG. 3 is a flow chart of the system side in accordance with an embodiment of the present invention; and
FIG. 4 is a flow chart of the terminals in accordance with an embodiment of the present invention.

### Preferred Embodiments of the Present Invention

The technical scheme of the present invention will be described in further detail with combination of the accompanying figures and the embodiments.

A large bandwidth multi-carrier system, as shown in FIG. 2, comprises a judgment unit, and a broadcast information transmission device and a broadcast information updating indication signaling transmission device which are respectively connected with the judgment unit, wherein,

The broadcast information transmission device is used to configure on the primary carriers the complete BCH information, including all the BCH information in the cell periodically transmitted on the primary carriers, when the judgment unit judges that the broadcast information is updated, the device updates the BCH information on the primary carriers and configures the BCH information on all secondary carriers, wherein, either the complete BCH information or the updated part is configured on the secondary carriers, and when the BCH is not updated, the device does not transmit the BCH information on the secondary carriers;

The judgment unit is used to judge whether the BCH information on the primary carriers has been updated or not, and if yes, the judgment unit notifies the broadcast information transmission device and the broadcast information updating indication signaling transmission device;

The broadcast information updating indication signaling transmission device is used to send the broadcast information updating indication signaling in the paging channels of all carriers when the judgment unit judges that the broadcast information is updated.

The method for updating the broadcast information in the above large bandwidth multi-carrier system only configures the complete BCH information on the primary carriers, including all the BCH information in the cell and periodically transmitted on the primary carriers, and when the broadcast information is updated, after the system updates the broadcast information on the primary carriers, it sends the broadcast information updating indication signaling to indicate the update in the paging channels of all carriers, meanwhile, the system configures the updated BCH information on the broadcast channels of all secondary carriers, wherein, the system might configure the complete BCH information in the broadcast channels of all secondary carriers or the updated part in the BCH information, and the BCH is not configured in the secondary carriers unless it is updated.

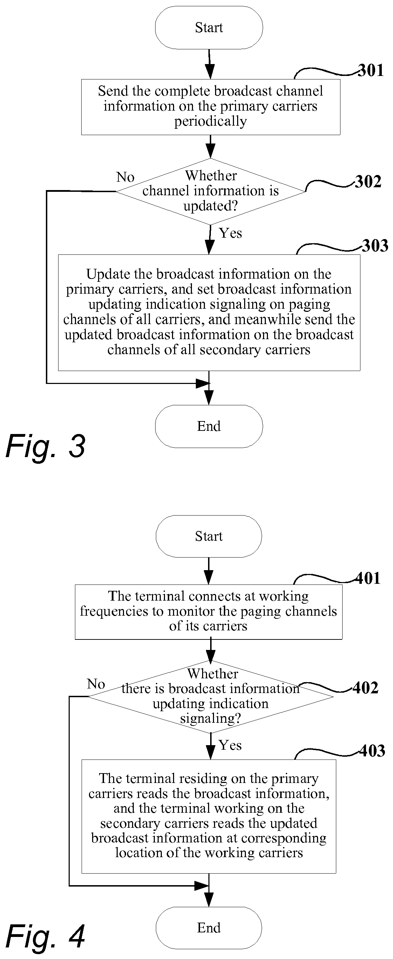

In the following, the process of transmitting the broadcast information in the above method will be introduced, and as shown in FIG. 3, the process comprises the following steps:
Step 301: the system periodically sends the complete BCH information in the primary carriers;
Step 302: judge whether the broadcast information is updated or not, and proceed to step 303 if yes, otherwise end the process;

In this step, if the broadcast information is judged as not being updated, the broadcast channels are not configured on the secondary carriers, and the overhead saved in the broadcast channels is assigned to the terminal via the downlink control channel.

Step 303: the system updates the broadcast information on the primary carriers according to the updated broadcast information, sets the broadcast information updating indication signaling in the paging channels of all carriers, and sends the updated broadcast information in the broadcast channels of all secondary carriers, wherein, the broadcast channels of the secondary carriers might carry the complete broadcast information or only the updated part in the broadcast information (such as the updated MIB or SIB);

In this step, the system can configure the broadcast channels of the secondary carriers according to the structure of the broadcast channels of the primary carriers, alternatively, the broadcast channels of the secondary carriers can be designed individually. Preferably, when the system carries the complete broadcast information in the broadcast channels of the secondary carriers, it configures the broadcast channels of the secondary carriers according to the structure of the broadcast channels of the primary carriers, that is, the time domain position, the size of the bandwidth, the broadcast information of the broadcast channels on the secondary carriers, and the spectrum position in the carriers (at the central bandwidth of 1.25M in the carriers) are the same as the broadcast channels in the primary carries;

In other embodiments, only the broadcast channels are configured on the secondary carriers to transmit the updated part in the broadcast information, wherein, the broadcast channels in the secondary carriers are mapped to the downlink share channels dynamically and the downlink control channel indicates their positions and sizes.

In the above process, after the broadcast information is updated, the paging channels on the secondary carriers are not configured with the broadcast information updating indication signaling, and the secondary carriers are not configured with the broadcast information, that is, the above process only sends the broadcast information updating indication signaling and the broadcast information on all secondary carriers in the process of updating the broadcast information.

In the following, the process of the terminal receiving the broadcast information will be introduced in the following, as shown in FIG. 4, the process comprises the following steps:
Step 401: the terminal CONNECT monitors the paging channel of the carrier on which it is located at the working frequency;
Step 402: judge whether there is broadcast information updating indication signaling or not, and proceed to step 403 if yes, otherwise continue to process this step;
Step 403: the terminals residing on the primary carriers read the broadcast information from the corresponding broadcast channels according to the broadcast information updating indication signaling, the terminals working on the secondary carriers read the updated broadcast information from the corresponding position of the working carrier, and complete the update of the broadcast information.

From the above embodiments, it can be seen that with the technical scheme of the present invention, when the broadcast information is updated, the terminals in both the primary carriers and the secondary carriers can update the corresponding broadcast information according to the BCH updating indication signaling of the paging channels on the carrier, and therefore solve the problem that the terminals frequency hop very frequently in order to update the broadcast information, simplify the process that the terminal updates the broadcast information, and save the overhead to the most extent for the multi-carrier system.

Of course, the present invention also has a lot of other embodiments, various corresponding modifications and transformations may be made to the present invention by those having ordinary skills in the art without departing from the spirit and essence of the present invention, which, however, should all belong to the scope of the claims of the present invention.

### Industrial Applicability

With the technical scheme of the present invention, the terminals on both the primary carriers and the secondary carriers can update the corresponding broadcast information according to the BCH updating indication signaling in the paging channels when the broadcast information is updated, thus finally simplifying the process that the terminals update the broadcast information, solving the problem that the terminals frequency hop very frequently in order to update the broadcast information, meanwhile, minimizing the BCH transmission overhead, saving the overhead to the most extent and improving the spectrum efficiency for the multi-carrier system.

## Claims

1. A method for updating broadcast information in a large bandwidth multi-carrier system, said method comprising:
a system side sending complete broadcast information periodically only on primary carriers, and when the broadcast information is updated, the system side updating the broadcast information on the primary carriers, and then sending a broadcast information updating indication signaling in paging channels of both the primary carriers and secondary carriers, and sending the updated broadcast information on all the secondary carriers.

2. The method of claim 1, wherein, when the broadcast information is not updated, said system side does not configure the broadcast information on the secondary carriers.

3. The method of claim 1, said method also comprising:
after receiving said broadcast information updating indication signaling, a terminal reading said updated broadcast information at a corresponding position.

4. The method of claim 3, wherein:
after receiving said broadcast information updating indication signaling, the terminal residing on the primary carriers reads said updated broadcast information on the primary carriers;
after receiving said broadcast information updating indication signaling, the terminal working on the secondary carriers reads said updated broadcast information in broadcast channels of the secondary carriers.

5. The method of claim 1, 3 or 4, wherein,
the step of said system side sending the updated broadcast information on all secondary carriers is: the system side only sending an updated part in the updated broadcast information on all secondary carriers, or the system side sending the complete broadcast information including the updated part on all secondary carriers.

6. The method of claim 5, wherein,
when said system side sends the complete broadcast information including the updated content in all secondary carriers, said method also comprises: said system side configuring the broadcast channels of all secondary carriers according to a structure of the broadcast channels of the primary carriers.

7. The method of claim 5, wherein,
when said system side only sends the updated part in the broadcast information on all secondary carriers, said method also comprises: said system side dynamically configuring the broadcast channels so as to transmit the updated part in the updated broadcast information, wherein, positions and sizes of said broadcast channel are indicated via a downlink control channel.

8. A large bandwidth multi-carrier system, the system comprising a judgment unit, and a broadcast information transmission device and a broadcast information update indication signaling transmission device connected with the judgment unit respectively, wherein,
said broadcast information transmission device is configured to: periodically send complete broadcast information on primary carriers, and update the broadcast information on the primary carriers according to a notification from said judgment unit, and send the updated broadcast information on all secondary carriers;
said judgment unit is configured to: judge whether the broadcast information on the primary carriers is updated or not, and, if yes, notify said broadcast information transmission device and said broadcast information updating indication signaling transmission device;
said broadcast information updating indication signaling transmission device is configured to: send the broadcast information updating indication signaling in paging channels of all carriers according to the notification from said judgment unit.

9. The system of claim 8, wherein,
the updated broadcast information sent on all secondary carriers by said broadcast information transmission device is the complete broadcast information including an updated content or an updated part in the updated broadcast information.

10. The system of claim 9, wherein,
said broadcast information transmission device is further configured to, when the complete broadcast information including the updated content is transmitted on all secondary carriers, configure broadcast channels of all secondary carriers according to a structure of the broadcast channels of said primary carriers.

11. The system of claim 9, wherein,
said broadcast information transmission device is further configured to, when only the updated part in the updated broadcast information is sent on all secondary carriers, dynamically configure the broadcast channels of all secondary carriers to transmit the updated part in the updated broadcast information, wherein, positions and sizes of the broadcast channels are indicated via a downlink control channel.

## Patentansprüche

1. Ein Verfahren zum Aktualisieren von Übertragungsinformationen in einem Mehrträgersystem mit großer Bandbreite, wobei das Verfahren Folgendes beinhaltet:
eine Systemseite sendet periodisch vollständige Übertragungsinformationen lediglich auf primären Trägern und wenn die Übertragungsinformationen aktualisiert werden,
aktualisiert die Systemseite die Übertragungsinformationen auf den primären Trägern und sendet dann eine Übertragungsinformationsaktualisierungsanzeigesignalisierung in Paging-Kanälen sowohl der primären Träger als auch der sekundären Träger und sendet die aktualisierten Übertragungsinformationen auf allen sekundären Trägern.

2. Verfahren gemäß Anspruch 1, wobei, wenn die Übertragungsinformationen nicht aktualisiert werden, die Systemseite die Übertragungsinformationen auf den zweiten Trägern nicht konfiguriert.

3. Verfahren gemäß Anspruch 1, wobei das Verfahren zudem Folgendes beinhaltet:
nach dem Empfangen der Übertragungsinformationsaktualisierungsanzeigesignalisierung liest ein Endgerät die aktualisierten Übertragungsinformationen an einer entsprechenden Position.

4. Verfahren gemäß Anspruch 3, wobei:
nach dem Empfangen der Übertragungsinformationsaktualisierungsanzeigesignalisierung liest das sich auf den primären Trägern befindende Endgerät die aktualisierten Übertragungsinformationen auf den primären Trägern;
nach dem Empfangen der Übertragungsinformationsaktualisierungsanzeigesignalisierung liest das auf den sekundären Trägern arbeitende Endgerät die aktualisierten Übertragungsinformationen in Übertragungskanälen der sekundären Träger.

5. Verfahren gemäß Anspruch 1, 3 oder 4, wobei
der Schritt, bei dem die Systemseite die aktualisierten Übertragungsinformationen auf allen sekundären Trägern sendet, folgender ist: die Systemseite sendet lediglich einen aktualisierten Teil in den aktualisierten Übertragungsinformationen auf allen sekundären Trägern oder die Systemseite sendet die vollständigen Übertragungsinformationen einschließlich des aktualisierten Teils auf allen sekundären Trägern.

6. Verfahren gemäß Anspruch 5, wobei,
wenn die Systemseite die vollständigen Übertragungsinformationen einschließlich des aktualisierten Inhalts in allen sekundären Trägern sendet, das Verfahren zudem Folgendes beinhaltet: die Systemseite konfiguriert die Übertragungskanäle aller sekundären Träger gemäß einer Struktur der Übertragungskanäle der primären Träger.

7. Verfahren gemäß Anspruch 5, wobei,
wenn die Systemseite lediglich den aktualisierten Teil in den Übertragungsinformationen auf allen sekundären Trägern sendet, das Verfahren zudem Folgendes beinhaltet: die Systemseite konfiguriert dynamisch die Übertragungskanäle, so dass der aktualisierte Teil in den aktualisierten Übertragungsinformationen übermittelt wird, wobei Positionen und Größen des Übertragungskanals über einen Downlink-Steuerungskanal angezeigt werden.

8. Ein Mehrträgersystem mit großer Bandbreite, wobei das System eine Beurteilungseinheit und eine Übertragungsinformationsübermittlungsvorrichtung und eine Übertragungsinformationsaktualisieranzeigesignalisierungsübermittlungsvorrichtung, die jeweils mit der Beurteilungseinheit verbunden sind, beinhaltet, wobei die Übertragungsinformationsübermittlungsvorrichtung für Folgendes konfiguriert ist:
periodisches Senden vollständiger Übertragungsinformationen auf primären Trägern und
Aktualisieren der Übertragungsinformationen auf den primären Trägern gemäß einer Benachrichtigung von der Beurteilungseinheit und Senden der aktualisierten Übertragungsinformationen auf allen sekundären Trägern;
die Beurteilungseinheit für Folgendes konfiguriert ist: Beurteilen, ob die Übertragungsinformationen auf den primären Trägern aktualisiert werden oder nicht, und
wenn ja, Benachrichtigen der Übertragungsinformationsübermittlungsvorrichtung und der Übertragungsinformationsaktualisierungsanzeigesignalisierungsübermittlungsvorrichtung;
die
Übertragungsinformationsaktualisierungsanzeigesignalisierungsübermittlungsvorrichtung für Folgendes konfiguriert ist: Senden der
Übertragungsinformationsaktualisierungsanzeigesignalisierung in Paging-Kanälen aller Träger gemäß der Benachrichtigung von der Beurteilungseinheit.

9. System gemäß Anspruch 8, wobei
die von der Übertragungsinformationsübermittlungsvorrichtung auf allen sekundären Trägern gesendeten aktualisierten Übertragungsinformationen die vollständigen Übertragungsinformationen einschließlich eines aktualisierten Inhalts oder ein aktualisierter Teil in den aktualisierten Übertragungsinformationen sind.

10. System gemäß Anspruch 9, wobei
die Übertragungsinformationsübermittlungsvorrichtung ferner konfiguriert ist, wenn die vollständigen Übertragungsinformationen einschließlich des aktualisierten Inhalts auf allen sekundären Trägern übermittelt werden, Übertragungskanäle aller sekundären Träger gemäß einer Struktur der Übertragungskanäle der primären Träger zu konfigurieren.

11. System gemäß Anspruch 9, wobei
die Übertragungsinformationsübermittlungsvorrichtung ferner konfiguriert ist, wenn lediglich der aktualisierte Teil in den aktualisierten Übertragungsinformationen auf allen sekundären Trägern gesendet wird, die Übertragungskanäle aller sekundären Träger zum Übermitteln des aktualisierten Teils in den aktualisierten Übertragungsinformationen dynamisch zu konfigurieren, wobei Positionen und Größen der Übertragungskanäle über einen Downlink-Steuerungskanal angezeigt werden.

## Revendications

1. Une méthode pour mettre à jour des informations de diffusion dans un système multiporteuse à grande largeur de bande, ladite méthode comprenant :
l'envoi périodique par un côté système d'informations de diffusion complètes seulement sur des porteuses primaires, et lorsque les informations de diffusion sont mises à jour,
la mise à jour par le côté système des informations de diffusion sur les porteuses primaires, et ensuite l'envoi d'une signalisation d'indication de mise à jour d'informations de diffusion dans des canaux de messagerie à la fois des porteuses primaires et des porteuses secondaires, et l'envoi des informations de diffusion mises à jour sur toutes les porteuses secondaires.

2. La méthode de la revendication 1, dans laquelle, lorsque les informations de diffusion ne sont pas mises à jour, ledit côté système ne configure pas les informations de diffusion sur les porteuses secondaires.

3. La méthode de la revendication 1, ladite méthode comprenant également :
après réception de ladite signalisation d'indication de mise à jour d'informations de diffusion, la lecture par un terminal desdites informations de diffusion mises à jour au niveau d'une position correspondante.

4. La méthode de la revendication 3, dans laquelle :
après réception de ladite signalisation d'indication de mise à jour d'informations de diffusion, le terminal résidant sur les porteuses primaires lit lesdites informations de diffusion mises à jour sur les porteuses primaires ;
après réception de ladite signalisation d'indication de mise à jour d'informations de diffusion, le terminal travaillant sur les porteuses secondaires lit lesdites informations de diffusion mises à jour dans les canaux de diffusion des porteuses secondaires.

5. La méthode de la revendication 1, de la revendication 3 ou de la revendication 4, dans laquelle,
l'étape consistant pour ledit côté système à envoyer les informations de diffusion mises à jour sur toutes les porteuses secondaires est : l'envoi par le côté système de seulement une partie mise à jour dans les informations de diffusion mises à jour sur toutes les porteuses secondaires, ou l'envoi par le côté système des informations de diffusion complètes incluant la partie mise à jour sur toutes les porteuses secondaires.

6. La méthode de la revendication 5, dans laquelle,
lorsque ledit côté système envoie les informations de diffusion complètes incluant le contenu mis à jour dans toutes les porteuses secondaires, ladite méthode comprend également : la configuration par ledit côté système des canaux de diffusion de toutes les porteuses secondaires selon une structure des canaux de diffusion des porteuses primaires.

7. La méthode de la revendication 5, dans laquelle,
lorsque ledit côté système envoie seulement la partie mise à jour dans les informations de diffusion sur toutes les porteuses secondaires, ladite méthode comprend également : la configuration dynamique par ledit côté système des canaux de diffusion de façon à transmettre la partie mise à jour dans les informations de diffusion mises à jour, dans laquelle, les positions et les dimensions dudit canal de diffusion sont indiquées via un canal de commande de liaison descendante.

8. Un système multiporteuse à grande largeur de bande, le système comprenant une unité de jugement, et un dispositif de transmission d'informations de diffusion et un dispositif de transmission de signalisation d'indication de mise à jour d'informations de diffusion connectés à l'unité de jugement respectivement, dans lequel,
ledit dispositif de transmission d'informations de diffusion est configuré pour : envoyer périodiquement des informations de diffusion complètes sur des porteuses primaires, et mettre à jour les informations de diffusion sur les porteuses primaires selon une notification de ladite unité de jugement, et envoyer les informations de diffusion mises à jour sur toutes les porteuses secondaires ;
ladite unité de jugement est configurée pour : juger si les informations de diffusion sur les porteuses primaires sont mises à jour ou non, et, dans l'affirmative, notifier ledit dispositif de transmission d'informations de diffusion et ledit dispositif de transmission de signalisation d'indication de mise à jour d'informations de diffusion ;
ledit dispositif de transmission de signalisation d'indication de mise à jour d'informations de diffusion est configuré pour : envoyer la signalisation d'indication de mise à jour d'informations de diffusion dans les canaux de messagerie de toutes les porteuses selon la notification de ladite unité de jugement.

9. Le système de la revendication 8, dans lequel,
les informations de diffusion mises à jour envoyées sur toutes les porteuses secondaires par ledit dispositif de transmission d'informations de diffusion sont les informations de diffusion complètes incluant un contenu mis à jour ou une partie mise à jour dans les informations de diffusion mises à jour.

10. Le système de la revendication 9, dans lequel,
ledit dispositif de transmission d'informations de diffusion est en outre configuré pour, lorsque les informations de diffusion complètes incluant le contenu mis à jour sont transmises sur toutes les porteuses secondaires, configurer les canaux de diffusion de toutes les porteuses secondaires selon une structure des canaux de diffusion desdites porteuses primaires.

11. Le système de la revendication 9, dans lequel,
ledit dispositif de transmission d'informations de diffusion est en outre configuré pour, lorsque seulement la partie mise à jour dans les informations de diffusion mises à jour est envoyée sur toutes les porteuses secondaires, configurer de façon dynamique les canaux de diffusion de toutes les porteuses secondaires pour transmettre la partie mise à jour dans les informations de diffusion mises à jour, dans lequel, les positions et les dimensions des canaux de diffusion sont indiquées via un canal de commande de liaison descendante.
